# EUROPÄISCHE PATENTANMELDUNG

(11) **EP 1 596 078 A2**
(43) Veröffentlichungstag der Anmeldung: **16.11.2005**
(21) Anmeldenummer: 05103352.0
(22) Anmeldetag: 26.04.2005
(51) Int. Cl.: F16C 32/06

(54) **Lagerelement und hydrostatisches Lager**

(30) Priorität: 11.05.2004 DE 102004023771
(71) Anmelder: Voith Paper Patent GmbH, 89522 Heidenheim (DE)
(72) Erfinder: Link, Christoph, 88250, Weingarten (DE)

(57) **Zusammenfassung**

Die Erfindung betrifft ein Lagerelement (1, 1.1, 1.2) mit mindestens einer primären Gleitfläche (4) zur Abstützung wenigstens einer sekundären Gleitfläche (5) eines Elements (2) und mit mindestens einer primären Lagerfläche (6) zur eigenen Lagerung auf einer sekundären Lagerfläche (7) eines Lagers (8), wobei im Bereich der Gleitfläche (4, 5) mindestens zwei Schmiertaschen (9.1, 9.2) und im Bereich der Larderflächen (6, 7) mindestens zwei Lagertaschen (10.1, 10.2) angeordnet sind, die während des Betriebs derart mit mindestens einem Fluid (11) über Kanäle (K9.1, K9.2, K10.1, K10.2) beaufschlagbar sind, dass sich jeweils ein hydrostatischer Spalt (12.1, 12.2) zwischen den Gleitflächen (4, 5) und zwischen den Lagerflächen (6, 7) ausbilden kann.

Die Erfindung ist dadurch gekennzeichnet, dass die jeweilige Schmiertasche (9.1, 9.2) der vorzugsweise primären Gleitfläche (4) mit der in oder entgegen der Wirkrichtung (W4) angeordneten jeweiligen Lagertasche (10.1, 10.2) der vorzugsweise primären Lagerfläche (6) mittels mindestens einer jeweiligen Fluidverbindungsleitung (K10.1, K10.2) verbunden ist und dass die Lagertaschen (10.1, 10.2) der vorzugsweise primären Lagerfläche (6) über die vorzugsweise sekundäre Lagerfläche (7) jeweils mittels mindestens einer Fluidzufuhrleitung (K9.1, K9.2) mit einer vorzugsweise regel-/steuerbaren Fluiddiuckquelle (13, 13.1, 13.2) verbunden sind.

## Beschreibung

Die Erfindung betrifft ein Lagerelement mit mindestens einer primären Gleitfläche zur Abstützung wenigstens einer sekundären Gleitfläche eines Elements und mit mindestens einer primären Lagerfläche zur eigenen Lagerung auf einer sekundären Lagerfläche eines Lagers, wobei im Bereich der Gleitflächen mindestens zwei Schmiertaschen und im Bereich der Lagerflächen mindestens zwei Lagertaschen angeordnet sind, die während des Betriebs derart mit mindestens einem Fluid über Kanäle beaufschlagbar sind, dass sich jeweils ein hydrostatischer Spalt zwischen den Gleitflächen und zwischen den Lagerflächen ausbilden kann.

Ferner betrifft die Erfindung ein hydrostatisches Lager mit zumindest einem Lagerelement.

Lager, insbesondere Radiallager, kommen an vielen Stellen in der Mechanik vor, insbesondere bei Papier- oder Kartonmaschinen, bei denen schwere Walzen (Wellen) bei Rotation derselben bezüglich deren Umfangsfläche genau in einer genau definierten Position gehalten werden müssen. Dabei müssen Schwankungen in radialer Richtung der Walze sowie Verkippungen der Walze gegen die Rotationsachse und damit gegen das Lager ausgeglichen werden, um eine genaue Einhaltung der relativen Lage des Außenumfangs der Walze zu gewährleisten.

Bekannt sind geschüttelte Brustwalzen, die mit speziellen Zylinderrollenlagern ausgerüstet sind. Nachteilig bei diesen ist, dass abhängig von der Belastung bestimmte Mindestdrehzahlen erforderlich sind, bevor die Schüttelung aktiviert werden kann. Weiterhin ist nachteilig, dass diese Lager eine für den jeweiligen Dauerbetrieb zu geringe Standzeit aufweisen, und so durch die notwendig werdende Wartung kostenintensiv sind.

Weiterhin sind Lager, in denen hydrostatische Lagerelemente zum Einsatz kommen, bekannt. Ein derartiges Lager ist beispielsweise in der europäischen Patentschrift EP 0 535 137 B1 offenbart. Das Lagerelement weist mindestens eine primäre Gleitfläche zur Abstützung wenigstens einer sekundären Gleitfläche einer Welle und mindestens eine primäre Lagerfläche zur eigenen Lagerung auf einer sekundären Lagerfläche eines Lagers auf, wobei im Bereich der primären Gleitfläche mindestens zwei Schmiertaschen und im Bereich der primären Lagerfläche mindestens zwei Lagertaschen angeordnet sind, die während des Betriebs derart mit mindestens einem Fluid über Kanäle beaufschlagbar sind, dass sich jeweils ein hydrostatischer Spalt zwischen den Gleitflächen und den Lagerflächen ausbilden kann.

Dieses hydrostatische Lagerelement entwickelt entsprechend dem Betriebsdruck des darin zur Anwendung kommenden Fluids eine Kraft, die gegen die Walze wirkt. Nachteilig ist, dass bei diesem Lager der Spalt zwischen den Gleitflächen und der Spalt zwischen den Lagerflächen gleichrangig mit Fluid versorgt werden und bei einer Mangelversorgung die Spalthöhe zwischen den Gleichflächen und zwischen an den Lagerflächen reduziert werden, Dies ist relativ harmlos für den Spalt zwischen den Lagerflächen, da hier die Relativgeschwindigkeiten der Teile zueinander gering sind. Kritisch ist es jedoch für den Spalt zwischen dem Gleitflächen, da hier hohe Relativgeschwindigkeiten der Teile vorliegen. Weiterhin ist von großem Nachteil, dass durch die Art der Fluidzufuhr auf das Lagerelement eine Kraft wirkt, die versucht, den Spalt zwischen den Lagerflächen zu vergriwißern.

Der Erfindung liegt daher die Aufgabe zugrunde, sowohl ein gegenüber dem Stand der Technik verbessertes Lagerelement als auch ein hydrostatisches Lager mit zumindest einem Lagerelement zur Verfügung zu stellen, das ein Element unterstützend an einer Gleitfläche abstützt, wobei die oben genannten Nachteile nicht auftreten und insbesondere die Standzeit gegenüber den bekannten Lagern erhöht ist.

Diese Aufgabe wird bei einem Lagerelement erfindungsgemäß dadurch gelöst,
- dass die jeweilige Schmiertasche der vorzugsweise primären Gleitfläche mit der in oder entgegen der Wirkrichtung angeordneten jeweiligen Lagertasche der vorzugsweise primären Lagerfläche mittels mindestens einer jeweiligen Fluidverbindungsleitung verbunden ist und
- dass die Lagertaschen der vorzugsweise primären Lagerfläche über die vorzugsweise sekundäre Lagerfläche jeweils mittels mindestens einer Fluidzufuhrleitung mit einer vorzugsweise regel-/steuerbaren Fluiddruckquelle verbunden sind.

Dadurch entsteht der Vorteil, dass sich an den Gleitflächen sowie an den Lagerflächen hydrostatische Spalte aufbauen und somit eventuell auftretende Kräfte zum Verkippen des Elements extrem klein sind, da die Lagerflächen durch einen dazwischen gebildeten Lagerspalt vollständig voneinander getrennt sind. Weiterhin ist sowohl die Höhe des Lagerspalts als auch die Höhe eines zwischen den Gleitflächen gebildeten Gleitspalts aufgrund der Zufuhr eines Fluids mittels einer vorzugsweise regel-/steuerbaren Fluiddruckquelle genau definierbar. Ferner ist der Gleitspalt, an dem hohe Relativgeschwindigkeiten vorliegen, bezüglich einer volumetrischen Unterversorgung des Lagers mit Fluid gegenüber dem Lagerspalt mit einer geringeren Relativgeschwindigkeit begünstigt. Unter Fluid ist hierbei jede Flüssigkeit, beispielsweise Öl oder pastöse Masse, as auch Luft zu verstehen, die geeignet ist, den vorgesehenen Volumenstrom zu vollziehen und/oder die Schmiereigenschaften an der Elementgleitfläche zu bilden.

In einer ersten möglichen Ausgestaltung ist vorgesehen, dass die jeweiligen Lagerflächen ebene, konvexe, konkave oder beliebige Oberflächenformen aufweisen, wobei eine oder zumindest annähernd eine Parallelität der Flächen gefordert ist. Dies ist vorteilhaft im Hinblick auf den Einsatz eines Elements mit einer uneingeschränkten Oberflächengeometrie.

Hinsichtlich einer kräftemäßig optimalen Lagerung des Elements ist vorgesehen, dass die Anzahl der Schmiertaschen im Bereich der vorzugsweise primären Gleitfläche gleich der Anzahl der Lagertaschen im Bereich der vorzugsweise primären Lagerfläche ist. Weiterhin ist es vorteilhaft, wenn die jeweils miteinander verbundenen Taschen der vorzugsweise primären Flächen ein gleiches oder annähernd gleiches Flächenverhältnis aufweisen, wobei die hydrostatisch wirksame Gesamtfläche am Lagerspalt bevorzugt kleiner ist als die hydrostatisch wirksame Gesamtfläche am Gleitspalt. Dabei können die Taschen der vorzugsweise primären Flächen eine Gesamtfläche aufweisen, die im Bereich von 10 bis 95 % der Gesamtwirkfläche der Taschen der vorzugsweise primären Flächen liegt.

Weiterhin weisen die jeweilige Fluidverbindungsleitung als auch die Fluidzufuhrleitung zu jeder Lagertasche ein Element, insbesondere eine Drossel, aufweist, das bei einer Durchströmung einen Druckabfall erzeugt. Der jeweils aus dem Druckabfall resultierende Volumenstrom bestimmt die Höhe des jeweiligen Spalts.

Das Lagerelement ist bevorzugt im Bereich der primären Lagerfläche zur freien Winkeleinstellung kugelförmig ausgebildet, wobei es in einer entsprechend gegenförmig ausgebildeten Kugel des Lagers flächig in der sekundären Lagerfläche gelagert ist und wobei die beiden Lagerflächen parallel oder annähernd parallel zueinander sind. Hierdurch ist ebenfalls ein Lager ermöglicht, bei dem dessen Gleitflächen zum unterstützten Element eine winklige Einstellung erlauben, diese also eine Verkippung eines Elements ausgleichen können, wobei die Gleitflächen in diesem Fall voneinander durch einen hydrostatischen Film getrennt sind.

In einer weiteren möglichen Ausführungsform ist die primäre Gleitfläche konkav geformt und umfasst maximal einen Umfangswinkel von 180° des vorzugsweise rotierenden Elements. Das Lagerelement nimmt dabei vorzugsweise die Form einer halbrunden Lagerschale für das vorzugsweise rotierende Element an. Dies ermöglicht eine optimale Abstützung des Elements.

Ferner ist es im Hinblick auf die Betriebszuverlässigkeit des Lagerelements von Vorteil, wenn die Fluidzufuhrleitung eine gesamte strömende Fluidmenge aufweist, die größer ist als die gesamte strömende Fluidmenge in den Fluidverbindungsleitungen. Damit ist fortwährend eine ausreichende Versorgung des Lagerelements mit einem Fluid gewährleistet.

Weiterhin kann das Lagerelement in erster Ausführung eine Wirkrichtung aufweisen, die entgegen der radialen Richtung des Elements gerichtet ist, wobei das Element eine rotierende Welle, insbesondere eine Walze oder ein Walzenzapfen, ist. Es kann in zweiter Ausführung eine Wirkrichtung aufweisen, die in radialer Richtung des Elements gerichtet ist, wobei das Element eine rotierende Hohlwelle, insbesondere ein Walzenrohr, ist und wobei das Lagerelement im Innern der Hohlwelle angeordnet ist. Oder es kann in dritter Ausführung eine Wirkrichtung aufweisen, die in axialer Richtung des Elements gerichtet ist, wobei das Element ein umlaufendes Element, insbesondere eine Scheibe oder ein Ring, ist. Das Lagerelement zeichnet sich also auch dadurch aus, dass es in allen erdenkbaren Einsatzmöglichkeiten seine Verwendung finden kann.

Die erfindungsgemäße Aufgabe wird bei einem hydrostatischen Lager mit zumindest einem Lagerelement dadurch gelöst, dass an der Gleitfläche des Elements mindestens ein hydrostatisches Hublager als weiteres Stützelement zwecks Erzeugung von Verspannungskräften vorgesehen ist, das eine Gleitfläche aufweist, die an einem Lagerkörper ausgebildet ist, der gegenüber dem Lagerelement verschiebbar und kippbar an einem im Lager angeordneten Führungselement gelagert ist.

Dadurch entsteht der Vorteil, dass eine Rotationsbewegung, eine Axialbewegung und/oder eine kleine Kippbewegung des Elements beliebig miteinander kombiniert werden kann. Dabei sind die hydraulischen Verspannkräfte jedoch jederzeit klar definiert.

Ebenso kann wiederum von Vorteil zwischen dem Führungselement und dem Lagerkörper ein Fluidraum gebildet sein, der durch eine Bohrung im Führungselement mit einem Fluid unter Druck beaufschlagbar ist, so dass die Gleitfläche des Stützelements gegen die Lagerfläche des Lagers gedrückt wird.

Weiterhin sind bevorzugt mehrere Lagerelemente und mehrere Hublager vorgesehen, wobei die resultierenden Wirkrichtungen der Lagerelemente und der Hublager vektoriell gegeneinander gerichtet sind. Damit entsteht keine resultierende Kraft mit all ihren Nachteilen hinsichtlich Auslegung der Lagerung, Dimensionierung der Lagerung und dergleichen.

Das Element kann in erster Ausgestaltung eine rotierende Welle, insbesondere eine Walze oder ein Walzenzapfen, sein, zu deren radialer Lagerung am Umfang zwei Lagerelemente und ein Hublager in einem Umfangswinkel von jeweils 120° +/- 20° im Lager angeordnet sind. In zweiter Ausführung kann das Element eine rotierende Hohlwelle, insbesondere ein Walzenrohr, sein, zu deren radialer Lagerung am Innenumfang zwei Lagerelemente und ein Hublager in einem Umfangswinkel von jeweils 120° +/- 20° angeordnet sind. Oder in dritter Ausführung kann das Element ein umlaufendes Element, insbesondere eine Scheibe oder ein Ring, sein, zu dessen axialer Lagerung an der sekundären Gleitfläche mehrere axial ausgerichtete Lagerelemente und an der gegenüberliegenden tertiären Gleitfläche mehrere axial ausgerichtete Hublager angeordnet sind. Das hydrostatische Lager zeichnet sich also auch dadurch aus, dass es in allen erdenkbaren Einsatzmöglichkeiten seine Verwendung finden kann.

Weitere Vorteile, Besonderheiten und zweckmäßige Weiterbildungen der Erfindung ergeben sich aus der nachfolgenden Beschreibung bevorzugter Ausführungsbeispiele unter Bezugnahme auf die Zeichnung.

### Es zeigen

- Figur 1:: eine schematische Querschnittsdarstellung durch eine Ausführungsform des erfindungsgemäßen Lagerelements mit einem gegenüber dem abgestützten Element angeordneten Hublager;
- Figur 2:: eine schematische Seitendarstellung einer Ausführungsform des erfindungsgemäßen hydrostatischen Lagers mit zwei Lagerelementen und einem Hublager;
- Figur 3:: eine schematische Längsschnittsdarstellung einer weiteren Ausführungsform des erfindungsgemäßen hydrostatischen Lagers; und
- Figur 4:: eine schematische und prinzipielle Querschnittsdarstellung einer weiteren Ausführungsform des erfindungsgemäßen Lagerelements,

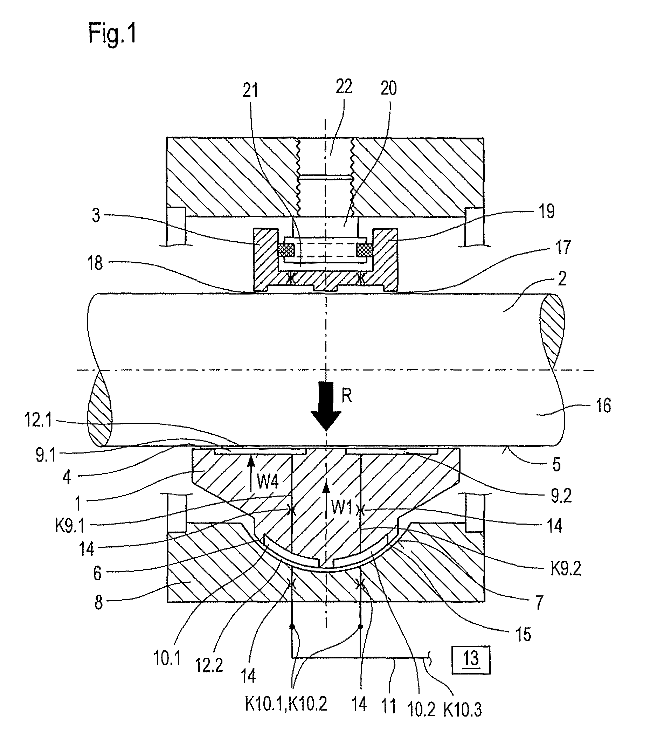

Die Figur 1 zeigt eine schematische Querschnittsdarstellung durch eine Ausführungsform des erfindungsgemäßen Lagerelements 1 mit einem gegenüber dem abgestützten Element 2 angeordneten Hublager 3.

Das Lagerelement 1 weist eine primäre Gleitfläche 4 zur Abstützung einer sekundären Gleitfläche 5 des Elements 2 und eine primäre Lagerfläche 6 zur eigenen Lagerung auf einer sekundären Lagerfläche 7 eines Lagers 8 auf. Dabei sind im Bereich der primären Gleitfläche 4 mindestens zwei Schmiertaschen 9.1, 9.2 und im Bereich der primären Lagerfläche 6 mindestens zwei Lagertaschen 10.1, 10.2 angeordnet, die während des Betriebs derart mit mindestens einem Fluid 11 über Kanäle K9.1, K9.2, K10.1, K10.2 beaufschlagbar sind, dass sich jeweils ein hydrostatischer Spalt 12.1, 12.2 zwischen den Gleitflächen 4, 5 (Gleitspalt 12.1) und den Lagerflächen 6, 7 (Lagerspalt 12.2) ausbilden kann.

Die jeweilige Schmiertasche 9.1, 9.2 der primären Gleitfläche 4 ist mit der entgegen der Wirkrichtung W4 (Pfeil) angeordneten jeweiligen korrespondierenden Lagertasche 10.1, 10.2 der primären Lagerfläche 6 mittels einer jeweiligen Fluidverbindungsleitung (Kanal) K9.1, K9.2 verbunden und die Lagertaschen 10.1, 10.2 der primären Lagerfläche 6 sind über die sekundäre Lagerfläche 7 jeweils mittels einer Fluidzufuhrleitung (Kanal) K10.1, K10.2, die in gewöhnlicher Weise in eine Fluidhauptzufuhrleitung münden K10.3, mit einer vorzugsweise regel-/steuerbaren Fluiddruckquelle 13, die aus dem Stand der Technik bereits bekannt ist, verbunden. Sowohl jede Fluidverbindungsleitung K9.1, K9.2 als auch jede Fluidzufuhrleitung K10.1, K10.2 zu jeder Lagertasche 10.1,10.2 weist ein Element 14, insbesondere eine Drossel, auf, das bei einer Durchströmung einen Druckabfall erzeugt. Der jeweils aus dem Druckabfall resultierende Volumenstrom bestimmt die Höhe des jeweiligen Spalts 12.1, 12.2. Die Fluidzufuhrleitungen K10.1, K10.2 (K10.3) weisen ferner eine gesamte strömende Fluidmenge auf, die größer ist als die gesamte strömende Fluidmenge in den Fluidverbindungsleitungen K9.1, K9.2.

Die beiden Lagerflächen 6, 7 weisen gemäß der Ausführung der Figur 1 konkave Oberflächenformen auf, wobei die beiden Flächen parallel oder annähernd parallel zueinander sind. In weiterer Ausgestaltung können sie jedoch auch ebene, konvexe oder beliebige Oberflächenformen aufweisen.

Weiterhin ist die Anzahl der Schmiertaschen 9.1, 9.2 im Bereich der primären Gleitfläche 4 gleich der Anzahl der Lagertaschen 10.1, 10.2 im Bereich der primären Lagerfläche 6. Die Taschen 9.1, 9.2, 10.1, 10.2 können dabei jede beliebige Außenkontur, beispielsweise in Form eines Kreises, eines Dreiecks, eines Quadrats, eines Vierecks oder eines weiteren Polygons, aufweisen. Wesentlich ist hierbei nur, dass die jeweils miteinander verbundenen Taschen 9.1, 10.1; 9.2, 10.2 der primären Flächen 4, 6 ein gleiches oder annähernd gleiches Flächenverhältnis aufweisen und dass die hydrostatisch wirksame Gesamtfläche am Spalt 12.2 kleiner ist als die hydrostatisch wirksame Gesamtfläche am Spalt 12.1. Die Taschen 9.1, 9.2, 10.1, 10.2 der primären Flächen 4,6 weisen eine Gesamtfläche auf, die im Bereich von 10 bis 95 % der Gesamtwirkfläche der Taschen 9.1, 9.2, 10.1, 10.2 der primären Flächen 4, 6 liegt. Der Begriff "Gesamtwirkfläche" ist dem Fachmann hierbei bestens bekannt.

Das Lagerelement 1 ist im Bereich der primären Lagerfläche 4 zur freien Winkeleinstellung kugelförmig ausgebildet und es ist in einer entsprechend gegenförmig ausgebildeten Kugel 15 des Lagers 8 in der sekundären Lagerfläche 7 gelagert. Überdies ist die primäre Gleitfläche 4 konkav geformt und sie umfasst maximal einen Umfangswinkel von 180° des vorzugsweise rotierenden Elements 2 ("halbrunde Lagerschale").

Ferner weist das Lagerelement 1 eine Wirkrichtung W1 (Pfeil) auf, die entgegen der radialen Richtung R des Elements 2 gerichtet ist. Das Element 2 ist hierbei eine Welle 16, insbesondere eine Walze oder ein Walzenzapfen. Jedoch kann es auch eine außen gestützte und rotierende Hohlwelle sein.

An der Gleitfläche 5 des Elements 2 ist ein hydrostatisches Hublager 3 als weiteres Stützelement 17 zwecks Erzeugung von Verspannungskräften vorgesehen ist, das eine Gleitfläche 18 aufweist, die an einem Lagerkörper 19 ausgebildet ist, der gegenüber dem Lagerelement 1 verschiebbar und kippbar an einem im Lager 8 angeordneten Führungselement 20 gelagert ist. Zwischen dem Führungselement 20 und dem Lagerkörper 19 ist ein Fluidraum 21 gebildet, der durch eine Bohrung 22 im Führungselement 20 mit einem Fluid 23 unter Druck beaufschlagbar ist, so dass die Gleitfläche 5 des Stützelements 17 gegen die Lagerfläche 7 des Lagers 8 gedrückt wird. Das Hublager 3 ist gemäß der Ausführung der Figur 1 diametral zum Lagerelement 1 angeordnet.

Bei einer geänderten konstruktiven Ausführung mit umgekehrter Kinematik kann das im Innern des Elements angeordnete Lagerelement eine Wirkrichtung aufweisen, die in radialer Richtung des Elements gerichtet ist. Das Element kann dabei eine rotierende Hohlwelle, insbesondere ein Walzenrohr, sein.

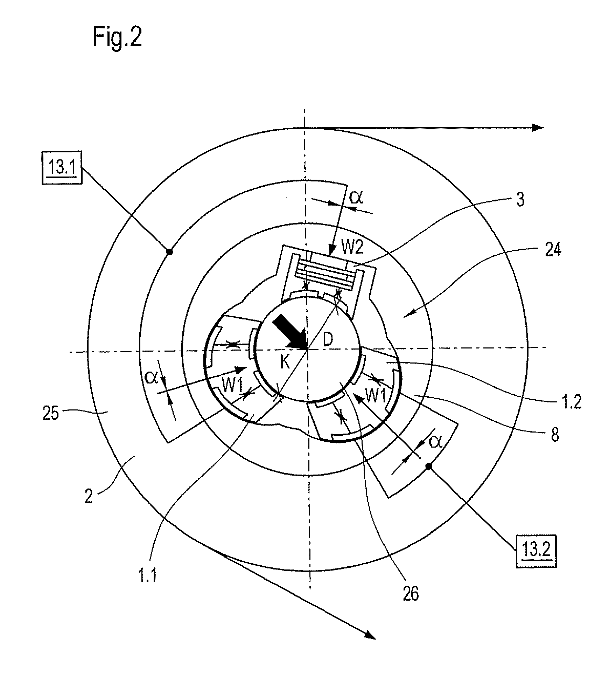

Die Figur 2 zeigt eine schematische Seitendarstellung einer Ausführungsform des erfindungsgemäßen hydrostatischen Lagers 24 mit zwei Lagerelementen 1.1, 1.2 und einem Hublager 3, die ein rotierendes Element 2 in Ausgestaltung eines Walzenzapfens 26 einer Walze 25, insbesondere einer Brustwalze einer Papier- oder Kartonmaschine, abstützen. Diese Ausführung lässt es zu, dass der Walzenzapfen axial bewegt werden kann, insbesondere sind periodische Hubbewegungen möglich. Die Ausführungen der Lagerelemente 1.1, 1.2 und des Hublagers 3 entsprechen prinzipiell denen der Figur 1.

Die zwei Lagerelemente 1.1, 1.2 und das Hublager 3 sind in einem Lager 8 gelagert und sie sind in diesem in einem Umfangswinkel α von jeweils 120° +/- 20° im Lager 24 angeordnet. Dabei sind die resultierenden Wirkrichtungen der Lagerelemente 1.1, 1.2 (Wirkrichtungen W1 (Pfeil)) und des Hublagers 3 (Wirkrichtung W2 (Pfeil)) vektoriell gegeneinander gerichtet, so dass die resultierende Lagerkraft K (Pfeil), zusammengesetzt aus den Siebzügen und dem Walzengewicht, aufgenommen werden kann.

Das Lagerelement 1.1 und das Hublager 3 sind an eine gemeinsame erste vorzugsweise regel-/steuerbare Fluiddruckquelle 13.1 angeschlossen, wohingegen das Lagerelement 1.2 an eine zweite vorzugsweise regel-/steuerbare Fluiddruckquelle 13.2 angeschlossen ist. Bei einem beispielhaften Walzenzapfen-Durchmesser D von 100 mm produziert die erste Fluiddruckquelle 13.1 einen Fluiddruck von 60 bar und einen Volumenstrom von 1 l/min für das Lagerelement 1.1 und von 0,4 l/min für das Hublager 3. Dagegen produziert die zweite Fluiddruckquelle 13.2 einen Fluiddruck von 160 bar und einen Volumenstrom von 2 l/min für das Lagerelement 1.2.

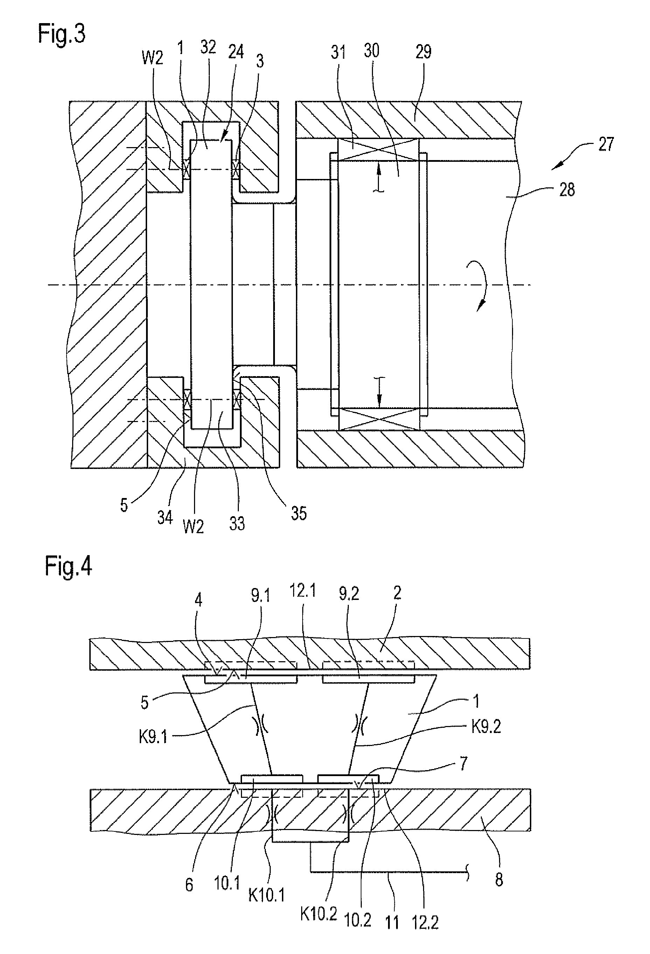

Die Figur 3 zeigt eine schematische Längsschnittsdarstellung einer weiteren Ausführungsform des erfindungsgemäßen hydrostatischen Lagers 24.

Die schematisch dargestellte Walze 27 umfasst einen Träger 28 und einen gegenüber diesem drehbaren Walzenrohr 29, wobei der Träger 28 an jedem Ende des Walzenrohrs 29 einen Lagerring 30 für ein symbolisch dargestelltes Lager 31 zum Lagern des Walzenrohrs 29 aufweist. Für die axiale Fixierung des Trägers 28 besitzt dieser mindestens an einem Ende endseitige Seitenwandungen 32 in Form eines Rings 33, der mittels mehreren hydrostatischen und symbolisch dargestellten Lagern 24 gegenüber einem Festlager 34 abgestützt ist. Die hydrostatischen Lager 24 weisen also eine jeweilige Wirkrichtung W2 auf, die in axialer Richtung des Rings 33 gerichtet ist. Zur axialen Lagerung des Rings 33 sind an dessen sekundärer Gleitfläche 5 mehrere axial ausgerichtete und symbolisch dargestellte Lagerelemente 1 und an der gegenüberliegenden tertiären Gleitfläche 35 mehrere axial ausgerichtete und symbolisch dargestellte Hublager 3 angeordnet, die allesamt die oben beschriebenen Merkmale aufweisen. Selbstverständlich kann auch das Lager 31 als hydrostatisches Lagerelement ausgebildet sein. Hinsichtlich des Weiteren möglichen konstruktiven Aufbaus der Walze 27 wird auf die deutsche Offenlegungsschrift DE 100 20 834 A1 verwiesen.

Die Figur 4 zeigt eine schematische und prinzipielle Querschnittsdarstellung einer weiteren Ausführungsform des erfindungsgemäßen Lagerelements 1, welches prinzipiell den Aufbau und die Funktionsweise des Lagerelements 1 der Figur 1 aufweist. Diesbezüglich wird somit auf die Beschreibung des Lagerelements 1 der Figur 1 verwiesen.

Das Lagerelement 1 weist jedoch sowohl eine ebene primäre Gleitfläche 4 als auch eine ebene primäre Lagerfläche 6 auf. Es eignet sich somit insbesondere zur Abstützung eines statisch, das heißt ortsfest, oder rotatorisch gelagerten Elements 2. Das Element 2 kann beispielsweise eine drehbare Aufspannplatte sein, wie sie in der deutschen Patentschrift DE 26 21 890 C2 offenbart ist, Das Lager 8 des Lagerelements 1 ist selbst wiederum vorzugsweise ortsfest gelagert.

Im Bereich der primären Gleitfläche 4 sind mindestens zwei Schmiertaschen 9.1, 9.2 und im Bereich der primären Lagerfläche 6 mindestens zwei Lagertaschen 10.1, 10.2 angeordnet, die während des Betriebs derart mit mindestens einem Fluid 11 über Kanäle K9.1, K9.2, K10.1. K10.2 beaufschlagbar sind, dass sich jeweils ein hydrostatischer Spalt 12.1, 12.2 zwischen den Gleitflächen 4, 5 (Gleitspalt 12.1) und den Lagerflächen 6, 7 (Lagerspalt 12.2) ausbilden kann.

Die beiden Schmiertaschen 9.1, 9.2 können, wie auch in den übrigen Ausführungsbeispielen, selbstverständlich auch im Bereich der sekundären Gleitfläche 5 (gestrichelte Darstellung) und die beiden Lagertaschen 10.1, 10.2, im Bereich der sekundären Lagerfläche 7 (gestrichelte Darstellung) mit jeweils genannter Funktion angeordnet sein.

Im Sinne der Erfindung kann ein oben beschriebenes Lagerelement an allen Stellen einer Papier- oder Kartonmaschine eingesetzt werden, an denen Elemente gelagert werden.

Zusammenfassend ist festzuhalten, dass durch die Erfindung sowohl ein gegenüber dem Stand der Technik verbessertes Lagerelement als auch ein hydrostatisches Lager mit zumindest einem Lagerelement geschaffen wird, das ein Element unterstützend an einer Gleitfläche abstützt, wobei die bekannten Nachteile des Sands der Technik nicht auftreten und insbesondere die Standzeit gegenüber den bekannten Lagern erhöht ist.

### Bezugszeichenliste

- 1, 1.1, 1.2: Lagerelement
- 2: Element
- 3: Hublager
- 4: Primäre Gleitfläche (Lagerelement)
- 5: Sekundäre Gleitfläche (Element)
- 6: Primäre Lagerfläche (Lagerelement)
- 7: Sekundäre Lagerfläche (Lager)
- 8: Lager
- 9.1,9.2: Schmiertasche
- 10.1,10.2: Lagertasche
- 11: Fluid
- 12.1: Hydrostatischer Spalt (Gleitspalt)
- 12.2: Hydrostatischer Spalt (Lagerspalt)
- 13: Fluiddruckquelle
- 13.1: Erste Fluiddruckquelle
- 13.2: Zweite Fluiddruckquelle
- 14: Element, insbesondere Drossel
- 15: Kugel
- 16: Welle, insbesondere Walze oder Walzenzapfen
- 17: Stützelement
- 18: Gleitfläche
- 19: Lagerkörper
- 20: Führungselement
- 21: Fluidraum
- 22: Bohrung
- 23: Fluid
- 24: Hydrostatisches Lager
- 25: Walze
- 26: Walzenzapfen
- 27: Walze
- 28: Träger
- 29: Walzenrohr
- 30: Lagerring
- 31: Lager
- 32: Seitenwandung
- 33: Ring
- 34: Festlager
- 35: Tertiäre Gleitfläche (Element)

- D: Walzenzapfen-Durchmesser
- K: Resultierende Lagerkraft (Pfeil)
- K9.1, K9.2: Fluidverbindungsleitung (Kanal)
- K10.1, K10.2: Fluidzufuhrleitung (Kanal)
- K10.3: Fluidhauptzufuhrleitung
- R: Radiale Richtung (Pfeil) (Element)
- W1: Wirkrichtung (Pfeil) (Lagerelement)
- W2: Wirkrichtung (Pfeil) (Hydrostatisches Lager)
- W4: Wirkrichtung (Pfeil) (Schmiertasche)
- α: Umfangswinkel

## Patentansprüche

1. Lagerelement (1, 1.1, 1.2) mit mindestens einer primären Gleitfläche (4) zur Abstützung wenigstens einer sekundären Gleitfläche (5) eines Elements (2) und mit mindestens einer primären Lagerfläche (6) zur eigenen Lagerung auf einer sekundären Lagerfläche (7) eines Lagers (8), wobei im Bereich der Gleitfläche (4, 5) mindestens zwei Schmiertaschen (9.1, 9.2) und im Bereich der Lagerflächen (6, 7) mindestens zwei Lagertaschen (10.1, 10.2) angeordnet sind, die während des Betriebs derart mit mindestens einem Fluid (11) über Kanäle (K9.1, K9.2, K10.1, K10.2) beaufschlagbar sind, dass sich jeweils ein hydrostatischer Spalt (12.1, 12.2) zwischen den Gleitflächen (4, 5) und zwischen den Lagerflächen (6, 7) ausbilden kann,
**dadurch gekennzeichnet,**
**dass** die jeweilige Schmiertasche (9.1, 9.2) der vorzugsweise primären Gleitfläche (4) mit der in oder entgegen der Wirkrichtung (W4) angeordneten jeweiligen Lagertasche (10.1,10.2) der vorzugsweise primären Lagerfläche (6) mittels mindestens einer jeweiligen Fluidverbindungsleitung (K10.1, K10.2) verbunden ist und
**dass** die Lagertaschen (10.1, 10.2) der vorzugsweise primären Lagerfläche (6) über die vorzugsweise sekundäre Lagerfläche (7) jeweils mittels mindestens einer Fluidzufuhrleitung (K9.1, K9.2) mit einer vorzugsweise regel-/steuerbaren Fluiddruckquelle (13, 13.1, 13.2) verbunden sind.

2. Lagerelement (1,1.1.1.2) nach Anspruch 1,
**dadurch gekennzeichnet,**
**dass** die jeweiligen Lagerflächen (6, 7) ebene, konvexe, konkave oder beliebige Oberflächenformen aufweisen.

3. Lagerelement (1, 1.1, 1.2) nach Anspruch 1 oder 2,
**dadurch gekennzeichnet,**
**dass** die Anzahl der Schmiertaschen (9.1, 9.2) im Bereich der vorzugsweise primären Gleitfläche (4) gleich der Anzahl der Lagertaschen (10.1, 10.2) im Bereich der vorzugsweise primären Lagerfläche (6) ist.

4. Lagerelement (1, 1.1, 1.2) nach Anspruch 1, 2 oder 3,
**dadurch gekennzeichnet,**
**dass** die jeweils miteinander verbundenen Taschen der vorzugsweise primären Flächen (4, 6) ein gleiches oder annähernd gleiches Flächenverhältnis aufweisen.

5. Lagerelement (1,1.1,1.2) nach einem der vorhergehenden Ansprüche,
**dadurch gekennzeichnet,**
**dass** die hydrostatisch wirksame Gesamtfläche am Spalt (12.2) kleiner ist als die hydrostatisch wirksame Gesamtfläche am Spalt (12.1).

6. Lagerelement (1, 1.1, 1.2) nach Anspruch 5,
**dadurch gekennzeichnet,**
**dass** die Taschen der vorzugsweise primären Flächen (4, 6) eine Gesamtfläche aufweisen, die im Bereich von 10 bis 95 % der Gesamtwirkfläche der Taschen der vorzugsweise primären Flächen (4, 6) liegt.

7. Lagerelement (1,1.1,1.2) nach einem der vorhergehenden Ansprüche,
**dadurch gekennzeichnet,**
**dass** die Fluidverbindungsleitung (K10.1, K10.2) ein Element (14), insbesondere eine Drossel, aufweist, das bei einer Durchströmung einen Druckabfall erzeugt.

8. Lagerelement (1, 1.1, 1.2) nach einem der vorhergehenden Ansprüche,
**dadurch gekennzeichnet,**
**dass** die Fluidzufuhrleitung (K9.1, K9.2) zu jeder Lagertasche (10.1, 10.2) ein Element (14), insbesondere eine Drossel, aufweist, das bei einer Durchströmung einen Druckabfall erzeugt.

9. Lagerelement (1, 1.1, 1.2) nach einem der vorhergehenden Ansprüche,
**dadurch gekennzeichnet,**
**dass** es im Bereich der primären Lagerfläche (6) zur freien Winkeleinstellung kugelförmig ausgebildet ist,
**dass** es in einer entsprechend gegenförmig ausgebildeten Kugel (15) des Lagers (8) flächig in der sekundären Lagerfläche (7) gelagert ist und
**dass** die beiden Lagerflächen (6, 7) parallel oder annähernd parallel zueinander sind.

10. Lagerelement (1,1.1, 1.2) nach einem der vorhergehenden Ansprüche,
**dadurch gekennzeichnet,**
**dass** die primäre Gleitfläche (4) konkav geformt ist und maximal einen Umfangswinkel von 180° des vorzugsweise rotierenden Elements (2) umfasst.

11. Lagerelement (1, 1.1, 1.2) nach einem der vorhergehenden Ansprüche,
**dadurch gekennzeichnet,**
**dass** die Fluidzufuhrleitung (K10.1, K10,2; K10.3) eine gesamte strömende Fluidmenge aufweist, die größer ist als die gesamte strömende Fluidmenge in den Fluidverbindungsleitungen (K9.1, K9.2).

12. Lagerelement (1,1.1,1.2) nach einem der vorhergehenden Ansprüche,
**dadurch gekennzeichnet,**
**dass** es eine Wirkrichtung (W1) aufweist, die entgegen der radialen Richtung des Elements (2) gerichtet ist, und
**dass** das Element (2) eine rotierende Welle (16), insbesondere eine Walze (25) oder ein Walzenzapfen (26, ist.

13. Lagerelement (1,1.1,1.2) nach einem der Ansprüche 1 bis 11,
**dadurch gekennzeichnet,**
**dass** es eine Wirkrichtung (W1) aufweist, die in radialer Richtung des Elements (2) gerichtet ist,
**dass** das Element (2) eine rotierende Hohlwelle, insbesondere ein Walzenrohr, ist und
**dass** das Lagerelement (1) im Innern der Hohlwelle (2) angeordnet ist.

14. Lagerelement (1,1.1,1.2) nach einem der Ansprüche 1 bis 11,
**dadurch gekennzeichnet,**
**dass** es eine Wirkrichtung (W1) aufweist, die in axialer Richtung des Elements (2) gerichtet ist, und
**dass** das Element (2) ein umlaufendes Element, insbesondere eine Scheibe oder ein Ring (33), ist.

15. Hydrostatisches Lager (24) mit zumindest einem Lagerelement (1, 1.1, 1.2) nach einem der vorhergehenden Ansprüche,
**dadurch gekennzeichnet,**
**dass** an der Gleitfläche (5) des Elements (2) mindestens ein hydrostatisches Hublager (3) als weiteres Stützelement (17) zwecks Erzeugung von Verspannungskräften vorgesehen ist, das eine Gleitfläche (18) aufweist, die an einem Lagerkörper (19) ausgebildet ist, der gegenüber dem Lagerelement (1, 1.1, 1.2) verschiebbar und kippbar an einem im Lager (8) angeordneten Führungselement (20) gelagert ist.

16. Hydrostatisches Lager (24) nach Anspruch 15,
**dadurch gekennzeichnet,**
**dass** zwischen dem Führungselement (20) und dem Lagerkörper (19) ein Fluidraum (21) gebildet ist, der durch eine Bohrung (22) im Führungselement (20) mit einem Fluid (23) unter Druck beaufschlagbar ist, so dass die Gleitfläche (18) des Stützelements (17) gegen die Lagerfläche (7) des Lagers (8) gedrückt wird.

17. Hydrostatisches Lager (24) nach Anspruch 15 oder 16,
**dadurch gekennzeichnet,**
**dass** mehrere Lagerelemente (1.1, 1.2) und mehrere Hublager (3) vorgesehen ist, wobei die resultierenden Wirkrichtungen (W1) der Lagerelemente (1.1, 1.2) und der Hublager (3) vektoriell gegeneinander gerichtet sind.

18. Hydrostatisches Lager (24) nach Anspruch 15, 16 oder 17,
**dadurch gekennzeichnet,**
**dass** das Element (2) eine rotierende Welle (16), insbesondere eine Walze (25) oder ein Walzenzapfen (26), ist und
**dass** zu deren radialer Lagerung am Umfang zwei Lagerelemente (1.1, 1.2) und ein Hublager (3) in einem Umfangswinkel (α) von jeweils 120° +/- 20° im Lager (8) angeordnet sind.

19. Hydrostatisches Lager (24) nach Anspruch 15, 16 oder 17,
**dadurch gekennzeichnet,**
**dass** das Element (2) eine rotierende Hohlwelle, insbesondere ein Walzenrohr, ist und
**dass** zu deren radialer Lagerung am Innenumfang zwei Lagerelemente (1.1, 1.2) und ein Hublager (3) in einem Umfangswinkel (α) von jeweils 120° +/-20° angeordnet sind.

20. Hydrostatisches Lager (24) nach Anspruch 15, 16 oder 17,
**dadurch gekennzeichnet,**
**dass** das Element (2) ein umlaufendes Element, insbesondere eine Scheibe oder ein Ring (33), ist und
**dass** zu dessen axialer Lagerung an der sekundären Gleitfläche (5) mehrere axial ausgerichtete Lagerelemente (1.1, 1.2) und an der gegenüberliegenden tertiären Gleitfläche (35) mehrere axial ausgerichtete Hublager (3) angeordnet sind.
